# EUROPÄISCHE PATENTSCHRIFT

(11) **EP 0 810 983 B1**
(45) Veröffentlichungstag und Bekanntmachung des Hinweises auf die Patenterteilung: **19.04.2000**
(21) Anmeldenummer: 96944021.3
(22) Anmeldetag: 19.12.1996
(51) Int. Cl.: C05F 17/00

(54) **VERFAHREN UND VORRICHTUNG ZUM KOMPOSTIEREN VON ORGANISCHEN STOFFEN**
PROCESS AND DEVICE FOR COMPOSTING ORGANIC SUBSTANCES
PROCEDE ET DISPOSITIF POUR TRANSFORMER DES MATIERES ORGANIQUES EN COMPOST

(30) Priorität: 20.12.1995 DE 19547784
(43) Veröffentlichungstag der Anmeldung: 10.12.1997
(73) Patentinhaber: HERHOF UMWELTTECHNIK GMBH, D-35606 Solms (DE)
(72) Erfinder: SCHNORR, Karl-Ernst, D-35633 Lahnau (DE)
(74) Vertreter: Zinnecker, Armin, Dipl.-Ing.
(86) Internationale Anmeldenummer: EP9605725
(87) Internationale Veröffentlichungsnummer: WO9722570

(56) Entgegenhaltungen:
- EP-A- 0 486 466
- EP-A- 0 647 604
- WO-A-95/21803

## Beschreibung

Die Erfindung betrifft ein Verfahren zum Kompostieren von organischen Stoffen, eine Vorrichtung zur Durchführung eines derartigen Verfahrens und ein durch ein derartiges Verfahren oder durch eine derartige Vorrichtung hergestelltes Kompostierungsprodukt. Das Verfahren eignet sich zum Kompostieren von organischen Stoffen, aber auch zum Kompostieren von Stoffgemischen, die organische Stoffe enthalten. Es eignet sich insbesondere zum Kompostieren von organische Stoffe enthaltenden Abfällen, insbesondere Hausmüll und hausmüllähnlichen Abfällen. Die Stoffe werden in einen geschlossenen Behälter eingebracht und unter Zwangsbelüftung kompostiert. Im Rahmen der Zwangsbelüftung kann Frischluft zugeführt werden. Die Abluft kann den zu kompostierenden Stoffen (Rottegut) erneut zugeführt werden; es kann also ein sogenannter Umluftbetrieb durchgeführt werden, wobei je nach Bedarf ein reiner Umluftbetrieb oder auch ein Umluftbetrieb unter Zumischung von Frischluft und/oder von reinem Sauerstoff stattfinden kann.

Ein Verfahren nach dem Oberbegriff des Anspruchs 1 ist aus der DE-OS 36 37 393 bekannt. Bei diesem Verfahren wird die Kompostierung durch Trocknung zum Stillstand gebracht, wenn die biologisch leicht abbaubaren organischen Substanzen (insbesondere niedere Fettsäuren und Aminosäuren) abgebaut sind. Bei diesem Verfahren, aber auch bei anderen aus dem Stand der Technik bekannten Verfahren wurden verschiedene Kontrollparameter verwendet, beispielsweise die CO₂-Entwicklung (DE-PS 40 21 868), der Sauerstoffverbrauch (DE-OS 41 07 340), die Wärmefreisetzung (DE-OS 40 21 865), die Temperaturerhöhung (J6 2167-278-A) oder der Gewichtsverlust, also die Verminderung der Masse des Rottegutes (DE-OS 38 39 018).

Bei den bisher bekannten Verfahren wurde ein weitgehender Abbau der organischen Substanz angestrebt (abfallwirtschaftliches Ziel), um die Restmasse, also die nach der Kompostierung verbleibende Masse, zu minimieren. Damit sind jedoch Nachteile verbunden: Aufgrund verhältnismäßig langer Kompostierungszeiträume (Fermentationszeiträume) für schwerer abbaubare organische Substratanteile werden verhältnismäßig große und damit teure Stapelräume benötigt. Ferner ist damit eine nutzlose Verschwendung eines wertvollen Rohstoffes, nämlich Kohlenstoff, mit einer entsprechenden unerwünschten Klimabelastung verbunden.

Ein wesentlicher Grund für die mit den bekannten Kompostierverfahren verbundenen Nachteile liegt darin, daß die Steuerung bzw. Regelung bzw. Kontrolle des Kompostierungsprozesses durch die oben angegebenen Parameter erfolgt. Die verschiedenen, während der Kompostierung ablaufenden biologischen Abbauprozesse überlagern sich gegenseitig. Es finden gleichzeitig sowohl aerobe als auch anaerobe biologische Abbauprozesse statt. Demzufolge ist die meßtechnische Erfassung und Steuerung der einzelnen, zur gleichen Zeit ablaufenden, vielfältigen mikrobiellen Stoffwechselvorgänge sehr schwierig.

Dies führte zu entsprechend langen Aufenthaltszeiten des Rotteguts in den Kompostierungsvorrichtungen (Kompostierungszellen). Beispielsweise wurde nach einer vorbekannten Lösung ein Chargenbetrieb dann beendet und wenn erforderlich durch Umschichtung des Rotteguts erneut in Gang gebracht, wenn das Porenvolumen, der CO₂-Gehalt oder die Temperatur in der Abluft nach einem Maximum wieder ein Minimum erreichte. Die hierbei (also vom Maximum zum Minimum) verstreichende Zeit verzögerte die Beendigung des Kompostierungsprozesses und verlängerte dementsprechend die Prozeßdauer unnötig und machte entsprechende Volumina für das Rottegut (Fermentervolumina) sowie aufwendige Aggregate zur Belüftung und zum Transport erforderlich. Prozeßtechnisch bringt die verlängernde Phase (vom Maximum zum Minimum) keinen Vorteil, da es sich hierbei um eine zeitliche Überbrückung partiell nicht optimal steuerbarer Stoffwechselfunktionen handelt (z.B. Zonenbildung).

Bei der Mietenkompostierung oder anderen offenen Kompostierungsverfahren (beispielsweise Freilandverfahren, Tunnelverfahren, Kanalverfahren oder Hallenverfahren) wurde dieser Mangel schon beizeiten erkannt und dadurch verbessert, daß in gewissen Zeitabständen - beispielsweise bei einem Absinken der Temperatur - die Mieten umgesetzt werden (s. Patent J6 2167-278-A).

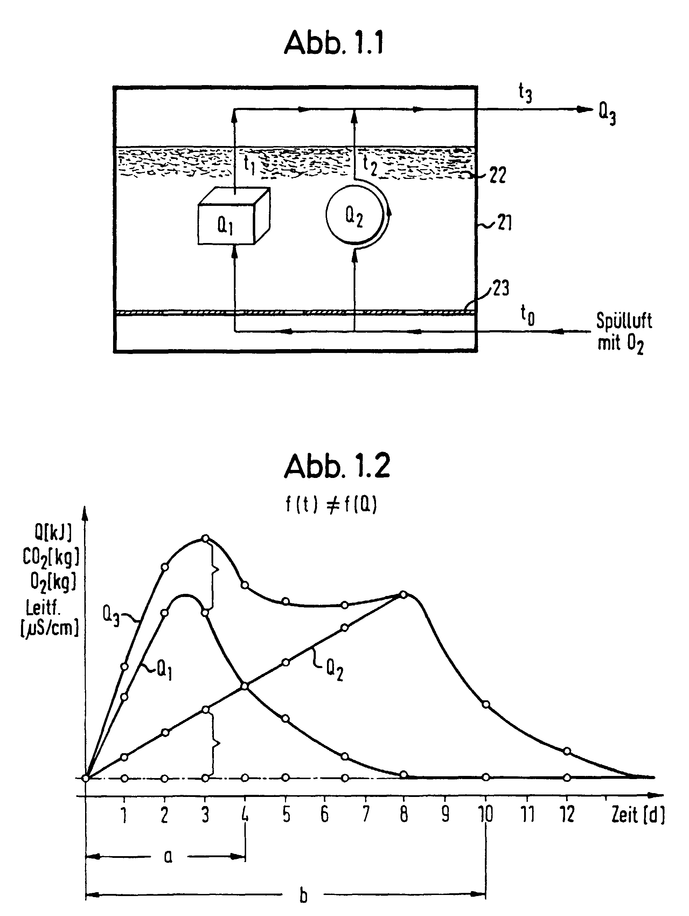

Als Beispiel für die Schwierigkeit meßtechnischer Kontrolle soll das nachfolgend anhand der Abbildungen 1.1 und 1.2 beschriebene, abstrahierte Modell dienen. In der Abbildung 1.1 ist ein Rottebehälter 21 dargestellt, in dem die zu kompostierenden organischen Stoffe (Rottegut) 22 auf einem Lochboden 23 aufliegen und von unten nach oben zwangsbelüftet werden. Durch den rechteckigen Körper, der die Substratmasse symbolisiert, wird die Wärmeenergie Q₁ in die Transportluftmenge mit der Temperatur t₁ induziert, während von der den runden Körper, der die Mikroorganismen-Biomasse symbolisiert, umströmenden Transportluftmenge mit der Temperatur t₂ die Wärmemenge Q₂ aufgenommen wird. Beide Luftmengen haben unterschiedliche, nicht kontrollierbare Temperaturen. Gemessen werden kann nur die Temperatur t₃ als Mischtemperatur.

Die Abbildung 1.2 zeigt den Verlauf der Wärmemenge Q über der Zeit (Kompostierungszeit) in Tagen. Daraus ist erkennbar, daß aufgrund der unterschiedlichen Strömungsverhältnisse die Transportluft mit der Wärmemenge Q₁ im zeitlichen Verlauf ihr Maximum schneller erreicht als die Transportluftmenge mit der Wärmemenge Q₂. Diese Tatsache ist zwar aus der Wärmemengensummenkurve Q₃ auch zu erkennen. Dies ist jedoch nicht zwingend immer der Fall. Beispielsweise können die Maxima der Kurvenverläufe Q₁ und Q₂ im Fall unterschiedlicher Massenverhältnisse und Materialdichte nicht zwingend aus dem Kurvenverlauf Q₃ ersehen werden.

Da die in dem Haufwerk aus organischen Stoffen bzw. Rottegut oder in der Abluft daraus gemessene Temperatur als bisheriger Hauptregelparameter aus den erläuterten Gründen eine mittlere Größe darstellt, ist nicht exakt kontrollierbar, in welcher Zone des Haufwerks keine optimalen Bedingungen herrschen. Daraus folgt, daß der Temperaturverlauf nicht unbedingt ein exaktes Maß der freigesetzten Wärmemenge liefert. Die Funktion des Temperaturverlaufs ist nicht zwingend identisch mit der Funktion der freigesetzten Wärmemenge. Eine optimale Prozeßkontrolle ist daher auf diesem Weg nicht möglich. Die Prozeßdauer hängt wesentlich davon ab, in welcher Zeit das Stoffwechselmaximum erreicht wird und wie es erkannt wird bzw. wie es erkannt werden kann. Dies ist mit dem beschriebenen Verfahren nicht immer zuverlässig und einwandfrei möglich.

Wenn für die Prozeßkontrolle und Steuerung, wie bisher üblich, der CO₂-Verlauf über der Zeit und/oder der Temperaturverlauf über der Zeit herangezogen werden, so ist nicht festzustellen, ob das jeweilige Stoffwechselprodukt auf eine aerobe oder anaerobe Stoffwechselfunktion zurückzuführen ist. Bei beiden Stoffwechselfunktionen werden sowohl CO₂ als auch Wärme freigesetzt, die zu einer meßbaren Temperaturerhöhung im Rottegemisch führen. Beide Stoffwechselfunktionen bedingen jedoch verschiedene verfahrenstechnische Prozeßsteuerungen. Ein optimaler und volkswirtschaftlich sinnvoller Betrieb kann daher nur dann gewährleistet werden, wenn die Prozeßkontrolle präzise auf die jeweils verfahrensrelevanten Parameter ausgerichtet ist. Dies war bisher nur mit Einschränkungen möglich.

Aus der EP-A-486 466 ist ein Verfahren zum kontrollierten und gesteuerten aeroben biologischen Abbau von organischen Abfällen bekannt, bei dem das abzubauende Substrat auf das bereits in mikrobiologischem Abbau befindliche Gut aufgegeben und das umgewandelte Gut unten abgezogen wird. Für den Abbau wird ein sauerstoffhaltiges Gas zugeführt. Um den Abbau der stickstoffhaltigen Verbindungen zu steuern, wird dem sauerstoffhaltigen Gas in Abhängigkeit vom NH₃-Gehalt der Abluft und/oder vom NH₃-Gehalt, welcher über Meßsonden in dem im Abbau befindlichen Substratinneren gemessen wird, und in Abhängigkeit vom pH-Wert dieses Substrates CO₂ zugesetzt. Dabei werden solche organische Abfälle, die keinen oder nur wenig Stickstoff enthalten, vor oder während ihrer Aufgabe auf das in Abbau befindliche Gut mit organischen und/oder anorganischen Stickstoffverbindungen bzw. solche enthaltenden Abfälle vermengt. Sobald Rottegut mit höherem pH-Wert zum Austragsort kommt, kann der Austrag von verrottetem Gut wieder gestoppt werden. Zusätzlich zur Regelung des Abzuges über den pH-Wert kann auch noch die Temperatur und/oder die NH₃-Konzentration zur Ermittlung des richtigen Austragezeitpunktes herangezogen werden.

Aufgabe der Erfindung ist es, ein verbessertes Verfahren der eingangs angegebenen Art und eine verbesserte Vorrichtung zur Durchführung eines derartigen Verfahrens vorzuschlagen.

Erfindungsgemäß wird diese Aufgabe durch die Merkmale des Anspruchs 1 gelöst. Die zu kompostierenden organischen Stoffe werden in einen geschlossenen Behälter eingebracht und unter Zwangsbelüftung kompostiert. Aus der Abluft wird Wasser abgeschieden. In dem aus der Abluft abgeschiedenen Wasser wird die elektrische Leitfähigkeit und/oder der Ammoniumgehalt gemessen. Die Kompostierung wird beendet, wenn die elektrische Leitfähigkeit bzw. der Ammoniumgehalt in dem abgeschiedenen Wasser einen vorbestimmten Wert erreicht hat. Die Messung bzw. Bestimmung der elektrischen Leitfähigkeit und/oder des Ammoniumgehalts erfolgt vorzugsweise kontinuierlich oder intervallweise. Ferner kann die Messung bzw. Bestimmung "on line" erfolgen.

Vorteilhafte Weiterbildungen der Erfindung sind in den Unteransprüchen beschrieben.

Einer oder gegebenenfalls auch mehrere der Meßwerte, also der Stickstoffgehalt bzw. die elektrische Leitfähigkeit bzw. der Ammoniumgehalt, können als Parameter zur Prozeßsteuerung verwendet werden. Sie können beispielsweise dadurch zur Steuerung des Rotteprozesses verwendet werden, daß die Luftzufuhr (Menge und/ oder Temperatur der Zuluft), das Ausmaß der Trocknung der Abluft und/oder das Verhältnis Frischluft/Umluft gesteuert bzw. geregelt werden.

Ein Ziel der vorliegenden Erfindung besteht darin, die Zeit für die Kompostierung, also für den biologischen Abbau leicht abbaubarer organischer Substanzen, insbesondere kommunaler Siedlungsabfälle, zu verkürzen. Ferner soll ermöglicht werden, biologisch stabilisierte Abfallreste unter atmosphärischen Bedingungen auf Zeit und dauerhaft zu lagern, ohne daß hiervon den Boden, das Wasser und die Luft belastende Emissionen ausgehen. Dieses Ziel ist erreicht, wenn der leicht abbaubare organische Substratanteil sowie die - den biologischen Abbau (mit Nitrifikation) einer zu kompostierenden Abfallmasse bewirkende - Mikroorganismen-Biomasse infolge Denitrifikation weitgehend aufgelöst ist. Ein weiterer Abbau höher molekularer Kohlenstoffverbindungen käme einer ungerechtfertigten Verschwendung einer Kohlenstoffresource und einer ungerechtfertigten Belastung der Erdatmosphäre gleich.

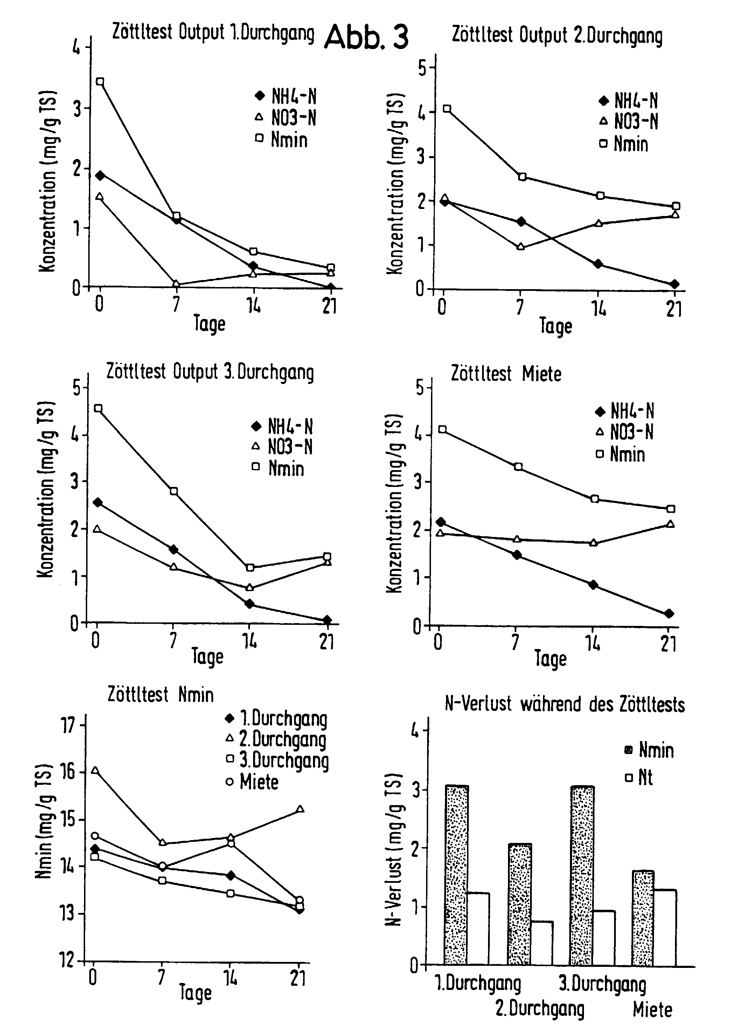

Dementsprechend wird erfindungsgemäß ein chargenweise durchgeführter Kompostierungsvorgang in einem geschlossenen Behälter zur Minimierung von Ammonium und Gesamtstickstoff im Substrat durch den Wechsel zwischen Nitrifikation (aerob) und Denitrifikation (anaerob) beschleunigt, ohne daß jeweils durch Entnahme des Rottegemisches aus dem Behälter der Prozeß unterbrochen wird. Hierbei wird die Zusammensetzung der Abluftfeuchte in Abhängigkeit von der Rottezeit kontrolliert und beispielhaft die elektrische Leitfähigkeit des mit der Abluft aus dem Rottegemisch ausgetragenen und aus der Abluft abgeschiedenen Wassers als Regelgröße verwendet. Der Stickstoffgehalt bzw. Ammoniumgehalt kann allerdings auch auf andere Weise gemessen bzw. bestimmt werden. Der erwähnte Vorgang ist beliebig wiederholbar, bis im Substrat (z.B. Kompost, Restabfall-Stabilat) ein entsprechend gewünschter Stabilitätsgrad mit niedrigem Gesamtstickstoff- und Ammoniumgehalt erreicht ist. Dies ist aus den in Abbildung 3 gezeigten Stickstoffbilanzen ersichtlich. Danach erfolgt die Trocknung des Rottegemisches zu einem sogenannten "Trockenstabilat" in einer kürzest möglichen Zeit, so daß durch weiteren biologischen Zwischenabbau (z.B. durch Pilze) keine neue biologisch leicht abbaure Biomasse entstehen kann. Nach der Trocknung kann das Stabilat zu Körpern verpresst und mit einer vorzugsweise luft- und/oder feuchtigkeitsdichten Schutzhülle versehen werden.

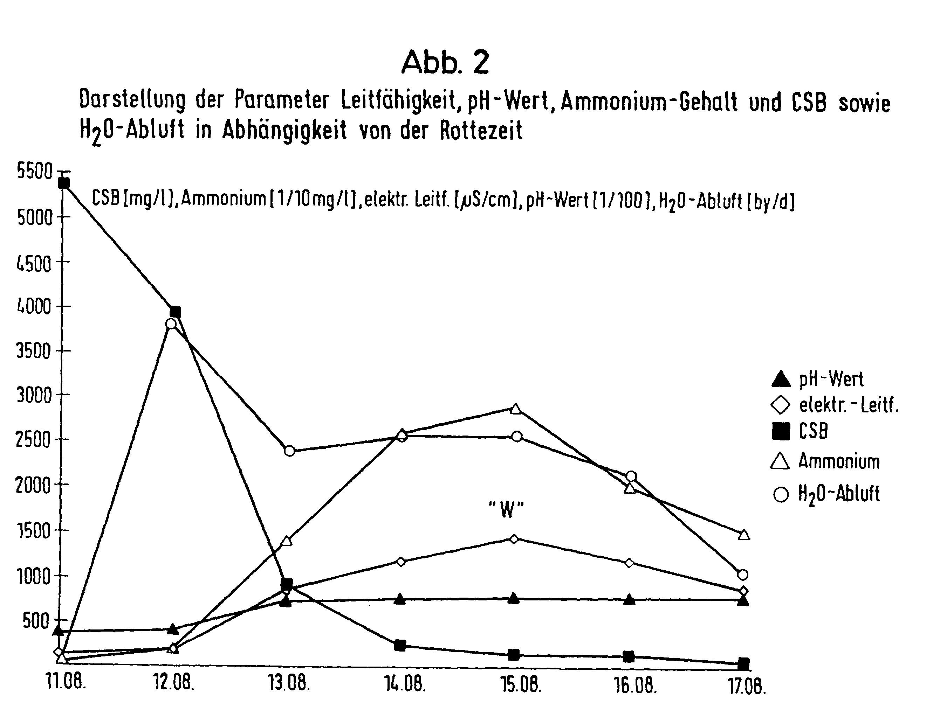

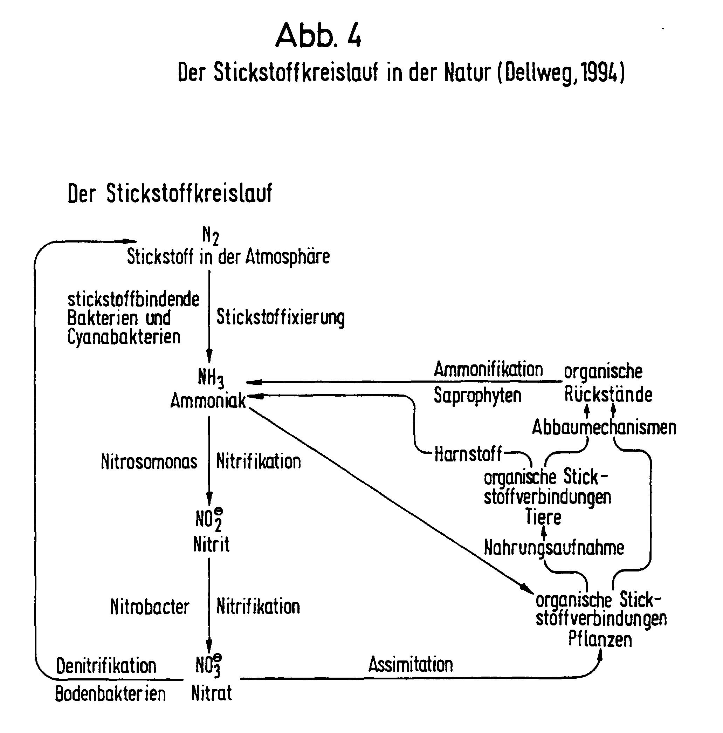

Die vorliegende Erfindung benutzt erstmals auf der Basis des Stickstoffkreislaufes mit festem Substrat, der in Abbildung 4 dargestellt ist, die elektrische Leitfähigkeit - in Abhängigkeit des ein aerobes Milieu kennzeichnenden Ammonium-Gehaltes (NH₄- Gehaltes) - in dem aus dem Rottegemisch heraustransportierten Wasser als Meßparameter zur Prozeßsteuerung, wodurch die Gesamtprozeßdauer erheblich verkürzt werden kann. Es ist möglich, die Gesamtprozeßdauer auf weniger als die Hälfte zu verkürzen. Dies ist aus der Abbildung 1.2 ersichtlich, wo die Prozeßdauer zunächst zehn Tage ("b") beträgt und auf weniger als die Hälfte, nämlich vier Tage ("a") verkürzt werden kann. Dieser Parameter hat. gegenüber den eingangs erwähnten Parametern den Vorteil, daß er hauptsächlich den aerob-biologischen Abbau der Stickstoffverbindungen (zu Ammonium im basischen Milieu) anzeigt und einfach zu messen ist. Die Graphik der Abbildung 2 zeigt - als Spiegelbild der im Rottegemisch ablaufenden Stoffwechselvorgänge - deutlich, daß auch der CSB-Wert (Chemische Sauerstoff-Bedarf), die Gewichtsänderung (also der Masseverlust des Rottegutes während der Kompostierung), die frei werdende Wassermenge sowie der Ammoniumgehalt im Wasser der Abluft eines Rotteprozesses als Meßparameter genutzt werden können. Ihre "on line"-Kontrolle ist allerdings kostenaufwendiger als eine Leitfähigkeitskontrolle, so daß die Kontrolle der elektrischen Leitfähigkeit zu bevorzugen ist.

Ferner ist die Verwendung der elektrischen Leitfähigkeit als Meß- und Regelgröße zuverlässiger, wie aus Abbildung 2 ersichtlich ist. Dort ist der den tatsächlichen Abbaugrad kennzeichnende Wendepunkt ("W") deutlich zu erkennen und bei der elektrischen Leitfähigkeit am deutlichsten ausgeprägt. Er zeigt deutlich den Übergang zu rückläufiger Ammonium- und Wasserfreisetzung.

Während früher die Nitrifikation des Stickstoffes in den Abfällen das endproduktbedingte Verfahrensziel der Kompostierung war, wird nach der Erfindung die gezielt durchgeführte Denitrifikation in festen Substraten angestrebt.

Ein weiterer Vorteil des erfindungsgemäßen Verfahrens besteht darin, daß die die Kompostqualität maßgeblich beeinflussende Stickstoffbindungsform direkt zu kontrollieren ist. Dies wird in Abbildung 3 deutlich. Die Verfügbarkeit einer Stickstoffquelle kennzeichnet sehr wesentlich den Reifegrad eines Kompostes. Ist bei einem aeroben Stoffwechselprozeß die Steigerung der frei werdenden Ammoniummenge nahezu gleich Null, so ist bereits ein hoher Stabilitäts-, Rotte- oder Reifegrad erreicht. Dieser ist jedoch noch steigerungsfähig, indem durch vorübergehende gezielt herbeigeführte anaerobe Fermentation (wie in der DE-OS 41 24 880 beschrieben) eine Denitrifikation erreicht wird (wie auch bei der Abwasserreinigung), bei der elementarer Stickstoff freigesetzt wird. Die hierzu erforderliche Kohlenstoffquelle ist bei der Kompostierung im Rottegut reichlich vorhanden.

Vorteilhaft ist es, darauf zu verzichten, eine Messung von Ammoniak oder Ammonium im Substrat durchzuführen, da der hierfür erforderliche technische Aufwand das Verfahren unnötig verteuert.

Wenn in dem Zustand niedrigster Leitfähigkeit im Wasser der Abluft aus dem Rottegemisch das Produkt getrocknet wird, ohne daß neue Zwischenabbauprodukte gebildet werden, entsteht eine Restbiomasse als Endprodukt mit höchster Lagerstabilität. Die Lagerstabilität kann auch dadurch verbessert werden, daß das auf die beschriebene Weise entstehende Trockenstabilat zu Körpern gepreßt und mit luft- und/oder feuchtigkeitsdichten Schutzhüllen versehen wird.

Wenn man ein Endprodukt herstellen will, das noch nicht vollständig ausgereift ist, kann der Kompostierungsprozeß - vorzugsweise durch Trocknung - dann beendet werden, wenn - aus einem Minimum ansteigend - der Ammoniumgehalt und/oder die Leitfähigkeit im Wasser der Abluft das Maximum noch nicht erreicht hat. Ein solches Endprodukt kann auch durch Beimischung biozider Stoffe (vorzugsweise natürliche organische Substanzen) stabilisiert werden, (z.B. Säurebildner, die bei Feuchtigkeitszutritt ein saures Milieu erzeugen, oder alkalische Stoffe, die - wie Kalk - durch einen hohen pH-Wert mikrobiellen Stoffwechsel unterdrücken). Es ist ferner möglich, durch Zumischung extrem trockener Stoffe die noch nicht fermentierte Feuchtigkeit so zu binden, daß mikrobielles Leben unterdrückt wird.

Nach einer weiteren vorteilhaften Weiterbildung wird der Kompostierungsprozeß dann beendet, wenn der Meßwert (also der gemessene Wert der elektrischen Leitfähigkeit und/oder des Ammoniumgehaltes) zwischen einem Minimum und einem Maximum liegt. Der Meßwert liegt dann auf einem ansteigenden Teil des Meßwertverlaufs.

Der Kompostierungsprozeß kann allerdings auch dann beendet werden, wenn das Maximum erreicht ist. Er kann schließlich auch dann beendet werden, wenn das Maximum des Meßwertes überschritten und das daran anschließende Minimum noch nicht erreicht ist. Die Beendigung erfolgt dann während eines fallenden Teils des Meßwertverlaufs. Schließlich kann der Kompostierungsprozeß beendet werden, wenn das Minimum erreicht ist.

Vorteilhaft ist es, das kompostierte Endprodukt einer externen physikalischen Trocknung zu unterziehen. Das kompostierte Endprodukt kann ferner mechanisch in einzelne Fraktionen aufgetrennt werden. Die einzelnen Fraktionen, aber auch das Endprodukt als solches, kann zu Körpern verpreßt werden. Das Endprodukt oder die verpreßten Körper können in feuchtigkeitsabweisende Behälter verstaut und/oder in Folien verpackt werden. Ferner kann das Endprodukt in brandsicheren Lagerstätten abgelegt werden. Das kompostierte Endprodukt kann in einzelnen Fraktionen und/oder in der gesamtheitlichen Zusammensetzung thermisch verwertet, behandelt und/oder vernichtet werden. Schließlich kann dem Endprodukt vor Beginn der Kompostierung und/oder nach dem Ende der Kompostierung eine Substanz zur Schadstoffestlegung beigemischt werden.

Die der Erfindung zugrundeliegende Aufgabe wird ferner gelöst durch eine Vorrichtung zur Durchführung des erfindungsgemäßen Verfahrens, die aus einem geschlossenen Behälter mit einer Einrichtung zur Zwangsbelüftung und einer Meßeinrichtung zum Messen der elektrischen Leitfähigkeit und/oder des Ammoniumgehalts in dem in der Abluft vorhandenen Wasser besteht. Die Einrichtung zur Zwangsbelüftung beinhaltet eine Einrichtung zur Zuführung von Zuluft und zur Abführung von Abluft. Gegebenenfalls kann eine Einrichtung zum vollständigen oder teilweisen Zuführen der Abluft vorgesehen sein (Umluftführung).

Die erfindungsgemäße Vorrichtung ist vorzugsweise gekennzeichnet durch eine Steuereinrichtung und/oder eine Regeleinrichtung zum Steuern bzw. Regeln des Verfahrens unter Verwendung des Stickstoffgehalts bzw. der elektrischen Leitfähigkeit bzw. des Ammoniumgehalts zur Steuerung bzw. Regelung des in der Vorrichtung durchgeführten Verfahrens.

Die erfindungsgemäße Vorrichtung ist ferner vorzugsweise dadurch gekennzeichnet, daß sie aus einer oder mehreren Zerkleinerungsanlagen, Homogenisierungsanlagen, Beschickungsanlagen, Rotteanlagen, Entleerungsanlagen, Klassierungsanlagen, Preßanlagen, Verpackungsanlagen, Entstaubungsanlagen, Steueranlagen, Bautenanlagen und/oder Thermoanlagen besteht, wobei einzelne oder mehrere Anlagen weggelassen werden können.

Die aus dem Rottegemisch austretende Abluft kann über einen luftgekühlten und/oder einen wassergekühlten Wasserabscheider geführt werden. Der Chargenbetrieb kann beendet werden, wenn die freigesetzte, durch Kühlung abgeschiedene Wassermenge ein zweites Maximum erreicht. Die Luft kann danach wieder vollkommen oder unter CO₂-Abscheidung in das Rottegemisch zurückgeführt werden (Umluftbetrieb).

Es ist möglich, der Luft Frischluft und/oder reinen Sauerstoff direkt oder indirekt zuzudosieren. Über die Kühlung der Abluft und/oder die Menge der Frischluft können die Feuchtigkeit in der Umluft und die Feuchtigkeitsaufnahme im Rottegemisch und damit der Wassergehalt im Rottegemisch gesteuert werden.

Es ist möglich, vor dem Ende der Kompostierung eine Hygienisierungsphase durch Wärmestau zu durchlaufen, um für Menschen, Tiere und Pflanzen schädliche Mikroorganismen abzutöten.

Der Kompostierungsprozeß kann chargenweise mehrfach wiederholt werden. Zwischen den einzelnen Kompostierungsprozessen kann das Rottegemisch bewegt, zerkleinert und/oder befeuchtet werden. Dem Rottegut kann Flüssigkeit zur Befeuchtung zugegeben werden. Ferner können Nährstoffe für den Biomassenaufbau zugegeben werden.

Bei dem zu kompostierenden Substrat kann es sich um organische Abfälle aus der Intensivtierhaltung und/oder aus gewerblichen Bereichen handeln. Es kann sich ferner um Abfälle aus anaeroben Abbauprozessen handeln.

Bei der erfindungsgemäßen Vorrichtung zur Durchführung des erfindungsgemäßen Verfahrens kann die Zerkleinerungs- und/oder Homogenisierungsanlage als Walzen-, Backen-, Hammer-, Kugel-, Scheren- oder Scheibenmühle ausgebildet sein. Die Beschickungsanlage kann eine teleskopartig ausziehbare Förderbandkonstruktion sein, die in einem an die Rottebox (Kompostierungsbehälter) anflanschbaren Gehäuse untergebracht sein kann. Die Beschickungsanlage kann allerdings auch ein Radladegerät mit Frischluftkabine oder eine pneumatische Förderanlage sein.

Die Rotteanlage kann aus einer oder mehreren Rottebehältern oder Rotteboxen oder Rottehallen bestehen. Die Rotteboxen besitzen vorzugsweise nicht korrodierende, wärmeisolierte Gehäuse und Tore, luftdurchlässige Böden, Gasführungsleitungen, Wasserabscheider, Ventilatoren, Gassteuerklappen, Wasserführungsleitungen, Kühlaggregate, Abluftfilter, Wasseraufbereitungsanlagen sowie Meß- und Regelanlagen. Die Gehäuse können aus säurebeständigem Stahlbeton bestehen. Sie können aus einzelnen Fertigteilen zusammengesetzt sein. Die Trennfugen können mit einer rottebeständigen Masse abgedichtet sein. Das Gehäuse kann aus einem fertig transportablen Betonkörper bestehen, der vor Ort geschalt und gefertigt sein kann. Die Innenseite des Betonkörperbodens kann eine Gefällestrecke zur Sickerwassersammlung aufweisen.

Eine weitere vorteilhafte Weiterbildung ist dadurch gekennzeichnet, daß die die Hohlräume der Rottebox ausfüllende Gasmenge im Kreislauf durch das Rottegemisch und anschließend über eine Kühlvorrichtung umgewälzt wird, wobei diese Gasmenge konstant ist, ihre Zusammensetzung einem vorgegebenen Programm mit getrennten Abbau- und Hygienisierungsphasen entsprechend der Leitfähigkeit im Wasser der Abluft gesteuert wird, der verbrauchte Sauerstoff ersetzt wird und die die umgewälzte Gasmenge vergrößernde CO₂- Menge aus dem Kreislauf über eine Filtervorrichtung entfernt wird. Die Sauerstoffzufuhr kann nach der CO₂-Abführung und diese nach der Kühlung erfolgen.

Das aus dem Gasstrom abgeschiedene Wasser wird vorzugsweise über eine Wasseraufbereitungsanlage soweit aufbereitet, daß es als Brauchwasser verwendbar ist, beispielsweise zur Kühlung des Gasvolumenstroms. Das bei der Kompostierung anfallende Überschußwasser kann nach einer Aufbereitung über einen offenen Verdunstungskühlkreis in die Atmosphäre verdunstet und/oder abgeleitet werden.

Das Kompostierungs-Endprodukt kann über eine Trommel- und/oder Schwingförder- und/oder Spannwellensiebanlage in mehrere Fraktionen getrennt werden. Eine und/oder mehrere Fraktionen können zu Pellets und/oder Briketts und/oder Rechteckballen und/oder Rundballen gepreßt werden. Das Endprodukt kann thermisch verwertet werden, beispielsweise in einer Rostfeuerungsverbrennungsanlage, Pyrolyseanlage, Vergasungs-Verbrennungsanlage, Wirbelschichtverbrennungsanlage, Verkokungsanlage, Hochofenanlage, Kupolofenanlage, Zementofenanlage oder Kleinfeuerungsanlage. Die Anlagenteile können zentral zusammengefaßt oder einzeln dezentral errichtet werden.

Das kompostierungsprodukt, das durch das erfindungsgemäße Verfahren oder in einer erfindungsgemäßen Vorrichtung hergestellt worden ist, kann zu Körpern verpreßt sein. Die Körper können mit einer Schutzhülle versehen sein, wobei diese Schutzhülle vorzugsweise luftdicht und/oder feuchtigkeitsdicht ist.

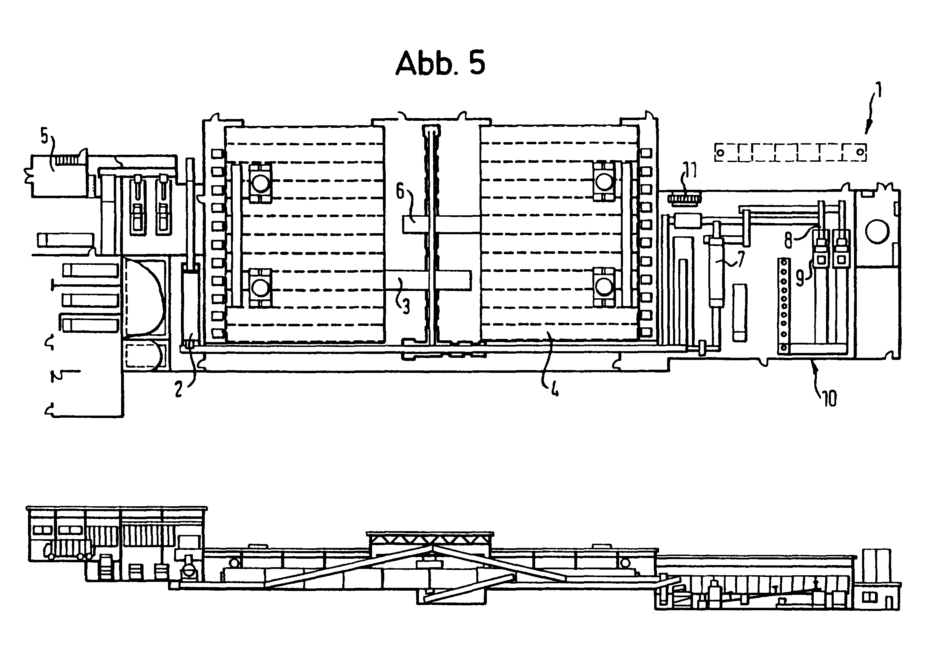

Eine Vorrichtung zur Durchführung des erfindungsgemäßen Verfahrens wird nachfolgend anhand der Abbildung 5 beschrieben. Die zu kompostierenden Abfälle werden nach ihrer Sammlung und Anlieferung an der Anlage 1 angeliefert, einer optischen Kontrolle unterzogen und von auffälligen Störstoffen befreit. Danach werden sie in einer Zerkleinerungsanlage 2 zerkleinert, dabei homogenisiert und über eine Beschickungsanlage 3 in die Rotteboxen 4 eingeführt. Nach der Beschickung wird das Regelprogramm 5 gestartet. Nach Erreichen der vorgegebenen Sollwerte wird der einmalige oder mehrmalige "batch"- oder Chargenbetrieb durch Auskühlen mit Trocknen des Endproduktes beendet und das Endprodukt mit einer Entleerungsvorrichtung 6 aus der Rottebox entfernt. Danach kann das Entprodukt mit Hilfe einer Klassierungsvorrichtung 7 in einzelne Fraktionen aufgeteilt, mit schadstoffbindenden Zuschlagstoffen versehen und/oder in einer Preßvorrichtung 8 zu Körpern verpreßt werden. Die einzelnen Fraktionen und/oder Preßlinge können zum Schutz vor Wasser und/oder feuchter Luft zur Lagerung mit einer Schutzhülle 9 versehen werden. Sie können jedoch auch einer Anlage 10 zur thermischen Umwandlung zugeführt werden. Alle Anlagenteile werden staubdicht gekapselt und mit einer oder mehreren Entstaubungsanlagen 11 verbunden.

## Patentansprüche

1. Verfahren zum Kompostieren von organischen Stoffen, insbesondere von organische Stoffe enthaltenden Abfällen,
bei dem die Stoffe in einen geschlossenen Behälter eingebracht werden und unter Zwangsbelüftung kompostiert werden,
bei dem aus der Abluft Wasser abgeschieden wird,
bei dem die elektrische Leitfähigkeit und/oder der Ammoniumgehalt des aus der Abluft abgeschiedenen Wassers gemessen wird
und bei dem die Kompostierung beendet wird, wenn die elektrische Leitfähigkeit bzw. der Ammoniumgehalt einen vorbestimmten Wert erreicht hat.

2. Verfahren nach Anspruch 1, dadurch gekennzeichnet, daß die elektrische Leitfähigkeit bzw. der Ammoniumgehalt als Parameter zur Prozeßsteuerung verwendet wird.

3. Verfahren nach Anspruch 1 oder 2, dadurch gekennzeichnet, daß der Kompostierungsprozeß beendet wird, wenn der Meßwert (des Stickstoffgehalts bzw. der elektrischen Leitfähigkeit bzw. des Ammoniumgehalts) zwischen einem Minimum und einem Maximum liegt.

4. Verfahren nach Anspruch 1 oder 2, dadurch gekennzeichnet, daß der Kompostierungsprozeß beendet wird, wenn der Meßwert das Maximum erreicht hat.

5. Verfahren nach Anspruch 1 oder 2, dadurch gekennzeichnet, daß der Kompostierungsprozeß beendet wird, wenn der Meßwert das Maximum überschritten und das Minimum noch nicht erreicht hat.

6. Verfahren nach Anspruch 1 oder 2, dadurch gekennzeichnet, daß der Kompostierungsprozeß beendet wird, wenn der Meßwert das Minimum erreicht hat.

7. Verfahren nach einem der vorhergehenden Ansprüche, dadurch gekennzeichnet, daß das kompostierte Endprodukt einer externen physikalischen Trocknung unterzogen wird.

8. Verfahren nach einem der vorhergehenden Ansprüche, dadurch gekennzeichnet, daß das kompostierte Endprodukt mechanisch in einzelne Fraktionen aufgetrennt wird.

9. Verfahren nach einem der vorhergehenden Ansprüche, dadurch gekennzeichnet, daß einzelne Fraktionen und/oder das kompostierte Endprodukt in seiner gesamtheitlichen Zusammensetzung zu Körpern verpreßt werden.

10. Verfahren nach einem der vorhergehenden Ansprüche, dadurch gekennzeichnet, daß das kompostierte Endprodukt bzw. dessen Fraktionen bzw. die daraus verpreßten Körper in feuchtigkeitsabweisende Behälter verstaut und/oder in Folien verpackt werden.

11. Verfahren nach einem der vorhergehenden Ansprüche, dadurch gekennzeichnet, daß das kompostierte Endprodukt bzw. dessen Fraktionen bzw. die daraus verpreßten Körper in brandsicheren Lagerstätten abgelegt werden.

12. Verfahren nach einem der vorhergehenden Ansprüche, dadurch gekennzeichnet, daß das kompostierte Endprodukt bzw. dessen Fraktionen bzw. die daraus verpreßten Körper thermisch verwertet, behandelt und/oder vernichtet werden.

13. Verfahren nach einem der vorhergehenden Ansprüche, dadurch gekennzeichnet, daß dem kompostierten Endprodukt bzw. dessen Fraktionen eine Substanz zur Schadstoffestlegung beigemischt wird.

14. Vorrichtung zur Durchführung des Verfahrens nach einem der vorhergehenden Ansprüche, bestehend aus einem geschlossenen Behälter mit einer Einrichtung zur Zwangsbelüftung und einer Meßeinrichtung zum Messen der elektrischen Leitfähigkeit und/oder des Ammoniumgehalts in dem in der Abluft vorhandenen Wasser.

15. Vorrichtung nach Anspruch 14, gekennzeichnet durch eine Steuereinrichtung und/oder Regeleinrichtung zum Steuern und/oder Regeln des Verfahrens unter Verwendung des Stickstoffgehalts bzw. der elektrischen Leitfähigkeit bzw. des Ammoniumgehalts.

## Claims

1. Process for composting organic matter, in particular organic-matter-comprising wastes,
in which the matter is introduced into a closed container and composted under forced aeration,
in which water is separated off from the exhaust air,
in which the electrical conductivity and/or the ammonium content of the water separated off from the exhaust air is measured
and in which the composting is ended when the electrical conductivity of the ammonium content has reached a predetermined value.

2. Process according to Claim 1, characterized in that the electrical conductivity or the ammonium content is used as a parameter for process control.

3. Process according to Claim 1 or 2, characterized in that the composting process is ended when the measured value (of the nitrogen content or of the electrical conductivity or of the ammonium content) is between a minimum and a maximum.

4. Process according to Claim 1 or 2, characterized in that the composting process is ended when the measured value has reached the maximum.

5. Process according to Claim 1 or 2, characterized in that the composting process is ended when the measured value has exceeded the maximum and has not yet reached the minimum.

6. Process according to Claim 1 or 2, characterized in that the composting process is ended when the measured value has reached the minimum.

7. Process according to one of the preceding claims, characterized in that the composted end product is subjected to an external physical drying.

8. Process according to one of the preceding claims, characterized in that the composted end product is mechanically separated into individual fractions.

9. Process according to one of the preceding claims, characterized in that individual fractions and/or the composted end product in its entire make-up are pressed to form bodies.

10. Process according to one of the preceding claims, characterized in that the composted end product or its fractions or the bodies pressed therefrom are loaded into moisture-repellent containers and/or are packaged in films.

11. Process according to one of the preceding claims, characterized in that the composted end product or its fractions or the bodies pressed therefrom are deposited in fireproof stores.

12. Process according to one of the preceding claims, characterized in that the composted end product or its fractions or the bodies pressed therefrom are thermally utilized, treated and/or destroyed.

13. Process according to one of the preceding claims, characterized in that a substance for fixing pollutant is admixed to the composted end product or its fractions.

14. Apparatus for carrying out the process according to one of the preceding claims, consisting of a closed container having a device for forced aeration and a measuring device for measuring the electrical conductivity and/or the ammonium content in the water present in the exhaust air.

15. Apparatus according to Claim 14, characterized by an open-loop control device and/or closed-loop control device for the open-loop control and/or closed-loop control of the process, using the nitrogen content or the electrical conductivity or the ammonium content.

## Revendications

1. Procédé pour le compostage de substances organiques, notamment de déchets contenant des substances organiques,
où les substances sont introduites dans un récipient fermé et sont compostées sous une aération forcée,
où de l'eau est séparée de l'air d'échappement,
où la conductivité électrique et/ou la teneur en ammonium de l'eau séparée de l'air d'échappement est mesurée
et où le compostage est terminé lorsque la conductivité électrique respectivement la teneur en ammonium a atteint une valeur prédéterminée.

2. Procédé selon la revendication 1, caractérisé en ce que la conductivité électrique respectivement la teneur en ammonium est utilisée comme paramètre pour la commande du processus.

3. Procédé selon la revendication 1 ou 2, caractérisé en ce que le procédé de compostage est terminé lorsque la valeur de mesure (de la teneur en azote respectivement de la conductivité électrique respectivement de la teneur en ammonium) se situe entre un minimum et un maximum.

4. Procédé selon la revendication 1 ou 2, caractérisé en ce que le processus de compostage est terminé lorsque la valeur de mesure a atteint le maximum.

5. Procédé selon la revendication 1 ou 2, caractérisé en ce que le processus de compostage est terminé, lorsque la valeur de mesure a dépassé le maximum et n'a pas encore atteint le minimum.

6. Procédé selon la revendication 1 ou 2, caractérisé en ce que le processus de compostage est terminé lorsque la valeur de mesure a atteint le minimum.

7. Procédé selon l'une des revendications précédentes, caractérisé en ce que le produit final composté est soumis à un séchage physique externe.

8. Procédé selon l'une des revendications précédentes, caractérisé en ce que le produit final composté est séparé mécaniquement en des fractions individuelles.

9. Procédé selon l'une des revendications précédentes, caractérisé en ce que les fractions individuelles et/ou le produit final composté, dans sa composition d'ensemble, sont comprimés pour former des corps.

10. Procédé selon l'une des revendications précédentes, caractérisé en ce que le produit final composté respectivement les fractions de celui-ci respectivement les corps obtenus par compression à partir de celui-ci sont stockés dans des récipients hydrofuges et/ou sont emballés dans des feuilles.

11. Procédé selon l'une des revendications précédentes, caractérisé en ce que le produit final composté respectivement les fractions de celui-ci respectivement les corps obtenus par compression à partir de celui-ci sont déposés dans des dépôts protégés contre le feu.

12. Procédé selon l'une des revendications précédentes, caractérisé en ce que le produit final composté respectivement les fractions de celui-ci respectivement les corps obtenus par compression à partir de celui-ci sont utilisés thermiquement, traités et/ou détruits.

13. Procédé selon l'une des revendications précédentes, caractérisé en ce qu'on ajoute au produit final composté respectivement aux fractions de celui-ci une substance pour la fixation des substances nocives.

14. Dispositif pour la mise en oeuvre du procédé selon l'une des revendications précédentes, constitué d'un récipient fermé avec une installation pour l'aération forcée et une installation de mesure pour mesurer la conductivité électrique et/ou la teneur en ammonium dans l'eau présente dans l'air d'échappement.

15. Dispositif selon la revendication 14, caractérisé par une installation de commande et/ou de réglage pour commander et/ou régler le procédé en utilisant la teneur en azote respectivement la conductivité électrique respectivement la teneur en ammonium.
